# EUROPEAN PATENT APPLICATION

(11) **EP 3 722 042 A1**
(43) Date of publication of application: **14.10.2020**
(21) Application number: 20168490.9
(22) Date of filing: 07.04.2020
(51) Int. Cl.: B23K 26/00, B22F 3/105, B23K 26/14, B23K 26/242, B23K 26/26, B23K 26/32, B23K 26/342

(54) **METHODS OF LASER ADDITIVE MANUFACTURING OR WELDING WITH HYDROGEN SHIELD GAS**

(30) Priority: 12.04.2019 US 201916383341
(71) Applicant: Hobart Brothers LLC, Troy OH 45373 (US)
(72) Inventor: AMATA, Mario A., Ohio, 45373 (US); BARHORST, Steven E., Ohio, 45373 (US); BUNDY, Joseph C., Ohio, 45373 (US); FIORE, Susan R., Ohio, 45373 (US)
(74) Representative: HGF

(57) **Abstract**

The present application relates to methods of laser additive manufacturing or welding, with using hydrogen in the shielding gas. This use of hydrogen during laser welding is counter-intuitive to standard formulation design practices which often strive to limit or eliminate hydrogen from the shielding gas for laser welding, or from the welding arc and weld pool for other welding methods. The present disclosure is directed to a laser welding technique that utilizes hydrogen in the shielding gas to limit the production of slag, oxides, or silicates during welding or additive manufacturing.

## Description

### FIELD

The present disclosure generally relates to a laser welding and additive manufacturing technique for producing a weld with a lower volume of slag, oxides, or silicates on the weld surface.

### BACKGROUND

The present disclosure relates generally to methods for laser welding and additive manufacturing.

Welding is a process that has become ubiquitous in various industries for a variety of applications. For example, welding is often used in applications such as shipbuilding, offshore platform, construction, pipe mills, and so forth. Certain welding techniques (e.g., Gas Metal Arc Welding (GMAW), Gas-shielded Flux Core Arc Welding (FCAW-G), and Gas Tungsten Arc Welding (GTAW)), typically employ a shielding gas (e.g., argon, carbon dioxide, or oxygen) to provide a particular local atmosphere in and around the welding arc and the weld pool during the welding process, while others (e.g., Self-shielded Flux Core Arc Welding (FCAW), Submerged Arc Welding (SAW), and Shielded Metal Arc Welding (SMAW)) do not.

Laser welding is a welding process that typically uses a shielding gas, such as helium (He) or argon (Ar). A mixture of helium, nitrogen (N) and carbon dioxide (CO₂) may also be used. Using hydrogen in the shielding gas during laser welding is counter-intuitive to standard formulation design practices which often strive to limit or eliminate hydrogen from the shielding gas for laser welding (or from the welding arc and weld pool for other welding methods) in order to avoid or minimize defects caused by hydrogen cracking.

During laser welding, solid slag, oxides, and silicates may form on the surface of a weld. As such, it can become necessary to stop welding in order to remove slag, oxides, or silicates from the surface of the weld bead. This can be particularly problematic for additive manufacturing using a laser.

There is a need for an improved laser welding technique that does not generate slag, oxides, or silicates on a weld surface during welding, or to the extent that the laser welding does generate slag, oxides, or silicates during welding, the slag, oxides, and silicates are easily removed from the weld surface.

### SUMMARY

According to an aspect of the present disclosure, a method for laser welding comprises the steps of: (a) providing a first metal piece comprising a first surface to be welded; (b) providing a second metal piece comprising a second surface to be welded; (c) positioning the first metal piece and the second metal piece so that the first and second surfaces are adjacent to each other; (d) providing a shield gas comprising hydrogen; (e) providing a high energy density beam; and (f) welding the first and second surfaces by scanning either or both of the first and second surfaces with the high energy density beam to produce a welded joint between the first and second surfaces. The presence of hydrogen in the shield gas reduces the amount of slag, silicates, or oxides produced during the welding step (f).

According to another aspect of the present disclosure, a method for laser additive manufacturing comprises the steps of (a) providing a base metal workpiece comprising a deposition surface; (b) providing a high energy density beam; (c) providing a shield gas comprising hydrogen; (d) heating the deposition surface of the workpiece using the high energy density beam to create a weld pool on the deposition surface; (e) feeding an additive metal to the weld pool; (f) melting the additive metal such that the additive metal melts and combines with the weld pool to add molten deposition material to the base metal workpiece; and (g) cooling the molten deposition material to form a deposition layer. The presence of hydrogen in the shield gas reduces the amount of slag, silicates, or oxides produced during the heating, feeding, melting, and cooling steps (d) through (g). Additional deposition layers may be formed by repeating steps (d) through (g). The additive metal may be in the form of an additive metal powder or an additive metal wire. In such embodiments, during the feeding step (e), a nozzle coaxially aligned with the high energy density beam may be used to spray additive metal powder.

According to another aspect of the present disclosure, a method for laser manufacturing comprises the steps of: (a) providing a bed of metal powder; (b) providing a high energy density beam; (c) providing a shield gas comprising hydrogen; (d) selectively melting a portion of metal powder using the high energy density beam; (e) fusing the portion of melted metal powder together; (f) forming a layer of fused metal powder; and (g) repeating steps (d) through (f) to form a series of layers of fused metal powder, and, ultimately, a metal part. The presence of hydrogen in the shield gas reduces the amount of slag, silicates, or oxides produced during the metal, fusing, and layer forming steps (d) through (f).

It is to be understood that both the foregoing general description and the following detailed description describe various embodiments and are intended to provide an overview or framework for understanding the nature and character of the claimed subject matter. The accompanying drawings are included to provide a further understanding of the various embodiments, and are incorporated into and constitute a part of this specification. The drawings illustrate the various embodiments described herein, and together with the description serve to explain the principles and operations of the claimed subject matter.

### BRIEF DESCRIPTION OF THE DRAWINGS

The following is a description of the examples depicted in the accompanying drawings. The figures are not necessarily to scale, and certain features and certain views of the figures may be shown exaggerated in scale or in schematic in the interest of clarity or conciseness.
FIGS. 1A and 1B are schematic illustrations showing a method of laser welding, according to the present disclosure.
FIGS. 2A, 2B, 2C, 2D, and 2E are schematic illustrations showing a method of laser additive manufacturing using a base metal workpiece, according to the present disclosure.
FIGS. 3A, 3B, 3C, and 3D, are schematic illustrations showing a method of laser additive manufacturing using a bed of metal powder, according to the present disclosure.
FIG. 4 is a flow chart illustrating a method of laser welding, according to the present disclosure.
FIG. 5 is a flow chart illustrating a method of laser additive manufacturing using a base metal workpiece, according to the present disclosure.
FIG. 6 is a flow chart illustrating a method of laser additive manufacturing using a bed of metal powder, according to the present disclosure.

The foregoing summary, as well as the following detailed description, will be better understood when read in conjunction with the figures. It should be understood that the claims are not limited to the arrangements and instrumentality shown in the figures. Furthermore, the appearance shown in the figures is one of many ornamental appearances that can be employed to achieve the stated functions of the apparatus.

### DETAILED DESCRIPTION

In the following detailed description, specific details may be set forth in order to provide a thorough understanding of embodiments of the present disclosure. However, it will be clear to one skilled in the art when disclosed examples may be practiced without some or all of these specific details. For the sake of brevity, well-known features or processes may not be described in detail. In addition, like or identical reference numerals may be used to identify common or similar elements.

One or more specific embodiments of the present disclosure will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements. As used herein, "approximately" may generally refer to an approximate value that may, in certain embodiments, represent a difference (e.g., higher or lower) of less than 0.01 %, less than 0.1%, or less than 1% from the actual value. That is, an "approximate" value may, in certain embodiments, be accurate to within (e.g., plus or minus) 0.01%, within 0.1%, or within 1% of the stated value.

According to one aspect of the present disclosure, a high energy density beam (such as a laser) may be used for laser welding or laser additive manufacturing.

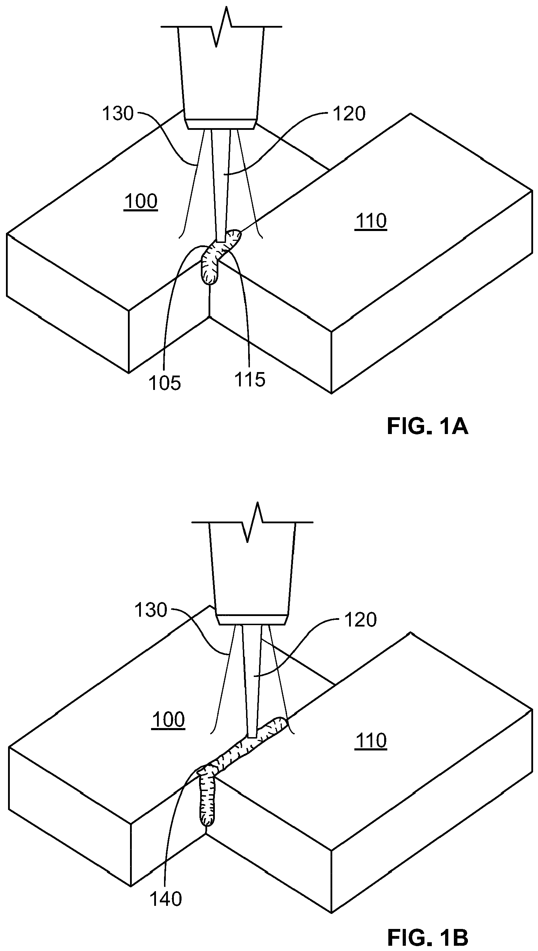

As shown in FIGS. 1A and 1B, during laser welding, two metal pieces 100, 110 to be joined are positioned or aligned in such a way that they are adjacent to each other. As shown in FIG. 1A, a high energy density beam 120 is focused and scanned over either or both of the metal pieces 100, 110 at a relevant site (or area) to be welded 105, 115 on each piece to produce, as shown in FIG. 1B, a welded joint 140 between the two metal pieces. A shield gas 130 containing hydrogen is used. The presence of hydrogen in the shield gas reduces the amount of slag, silicates, or oxides produced.

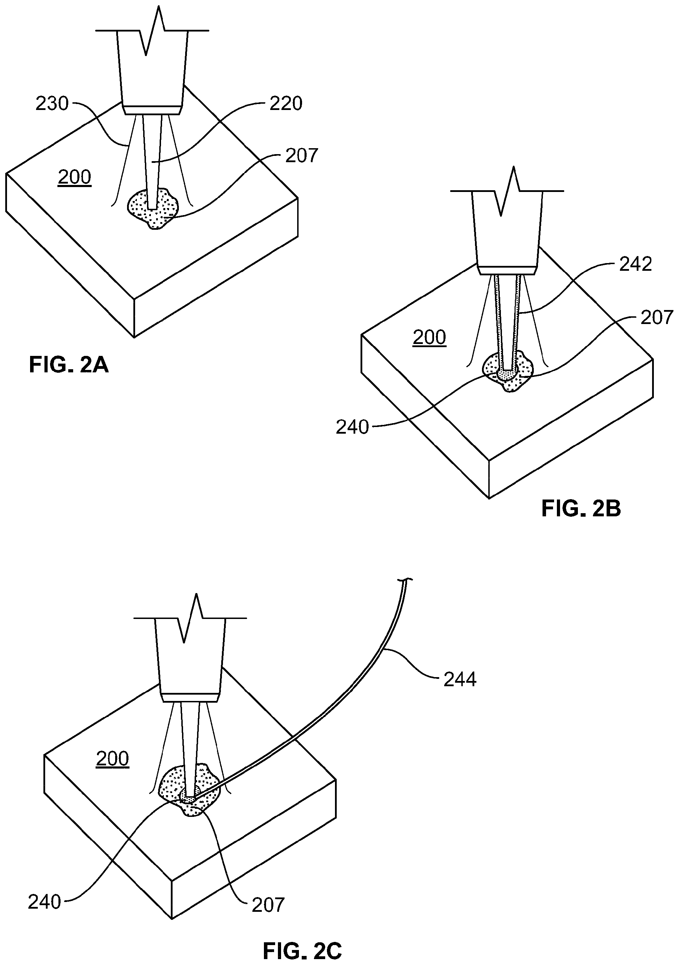

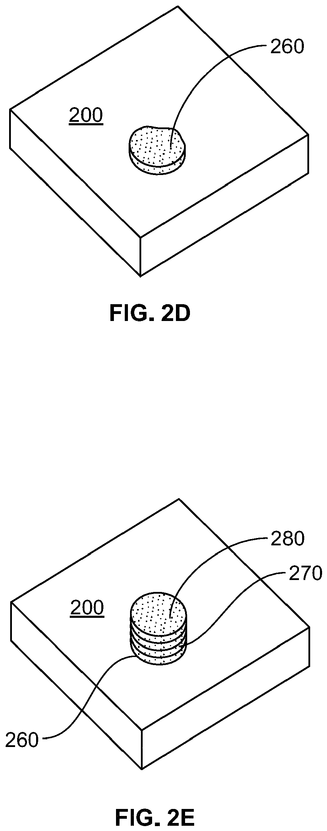

As shown in FIGS. 2A, 2B, 2C, 2D, and 2E during laser additive manufacturing, a base metal workpiece 200 may be used as a base upon which to deposit material and may thus have a deposition surface 205 upon which material may be deposited. As shown in FIG. 2A, a high energy density beam 220 is used to heat the deposition surface 205 and thus create a weld pool 207 on the deposition surface. A shield gas 230 containing hydrogen is used. The presence of hydrogen in the shield gas reduces the amount of slag, silicates, or oxides produced. An additive metal 240 is fed to the weld pool 207. The additive metal 240 may be in the form of an additive metal powder 242 (as shown in FIG. 2B) or an additive metal wire 244 (as shown in FIG. 2C). When the additive metal 240 is in the form of an additive metal powder 242, the additive metal powder 242 may be fed to the weld pool via a nozzle 250 coaxially aligned with the high energy density beam 220. When the additive metal 240 is in the form of an additive metal wire 244, the additive metal wire 244 may be a solid, flux-cored, or metal-cored wire. The additive metal 240 melts and combines with the weld pool 207 to add molten deposition material to the base metal workpiece 200. As shown in FIG. 2D, the molten deposition material cools to form a deposition layer 260. As shown in FIG. 2E, additional deposition layers 270, 280 may be formed by following the same process.

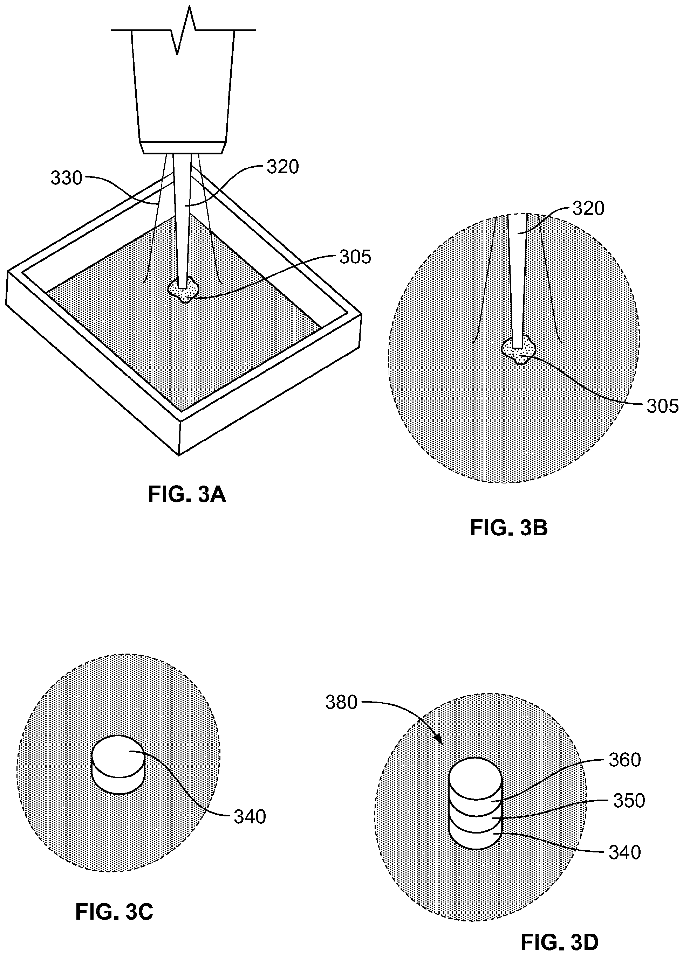

As shown in FIGS. 3A, 3B, 3C, and 3D, another method for laser additive manufacturing involves starting with a bed of metal powder 300. As shown in FIG. 3A, a high energy density beam 320 is focused as used with precision to selectively melt a portion of metal powder 305. A shield gas 330 containing hydrogen is used. As shown in FIG. 3B, the portion of melted metal powder 305 fuses together and then cools. As shown in FIG. 3C, a layer of melted metal powder 340 can then be formed. As shown in FIG. 3D, by building up layers 350, 360 of melted metal powder, a metal part 380 may be formed.

According to the present disclosure, the laser additive manufacturing method shown in FIGS. 2A-2E may be used in conjunction with the laser welding method shown in FIGS. 1A-1B, i.e., depositing additive metal material to weld two metal pieces together.

According to the present disclosure, another method for laser additive manufacturing or laser welding may involve a hybrid process involving gas metal arc welding (GMAW) in combination with laser welding, where a high energy density beam melts a metal workpiece in front of the arc. In addition, the laser additive manufacturing or laser welding method may involve a cold wire process where a wire is added and melted with a high energy density beam.

According to the present disclosure, the shield gas used during laser welding or laser additive manufacturing comprises hydrogen. For example, the shield gas may comprise 1-100 %, 2-50 %, 3-10 %, 5-8 %, or 6-7 % hydrogen by volume. The hydrogen in the shield gas acts as a reducer by creating a reducing atmosphere. The shield gas may further comprise argon. For example, the shield gas may further comprise 0-99 %, 50-98 %, 90-97 %, 92-95%, or 93-94% argon by volume. Alternatively, as a substitute for argon, the shield gas may further comprise carbon dioxide, nitrogen, helium, oxygen, or a mixture thereof, including argon (for example, a mixture of argon and carbon dioxide). For example, when additive manufacturing using an additive metal wire, it may help with stability to use a shield gas comprising hydrogen, argon, and a small percentage of oxygen.

According to the present disclosure, the metals to be welded together, the base metal workpiece, and the bed of metal powder are not limited to specific metals. As such, the metals used according to the present disclosure may include steel (such as carbon steel, stainless steel, and high-strength low-alloy steel), aluminum, and titanium, as well as other suitable metals.

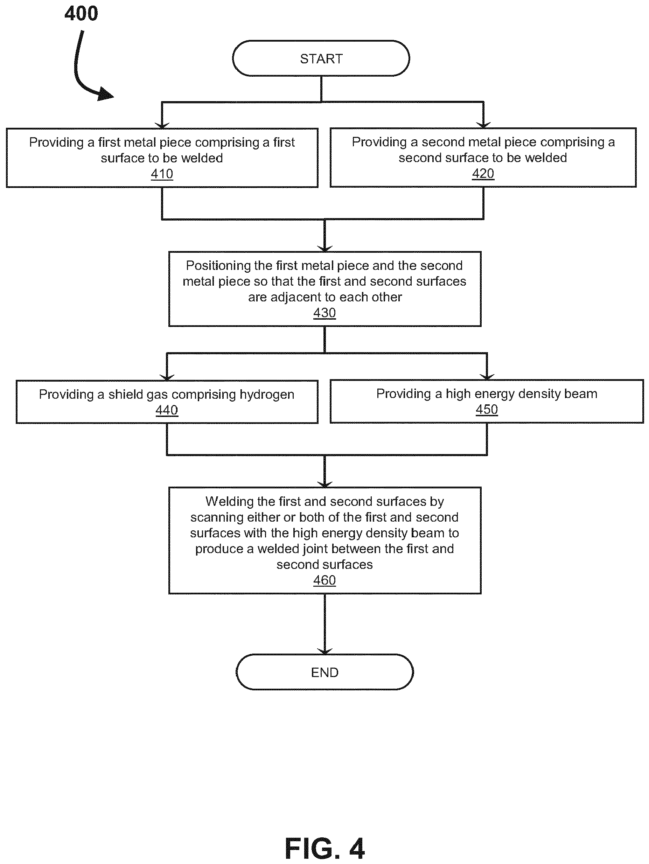

Methods according to the present disclosure are also illustrated in the flow charts in FIGS. 4, 5, and 6.

FIG. 4 illustrates a method 400 for laser welding comprising the steps of: providing a first metal piece comprising a first surface to be welded at step 410; providing a second metal piece comprising a second surface to be welded at step 420; positioning the first metal piece and the second metal piece so that the first and second surfaces are adjacent to each other at step 430; providing a shield gas comprising hydrogen at step 440; providing a high energy density beam at step 450; and welding the first and second surfaces by scanning either or both of the first and second surfaces with the high energy density beam to produce a welded joint between the first and second surfaces at step 460.

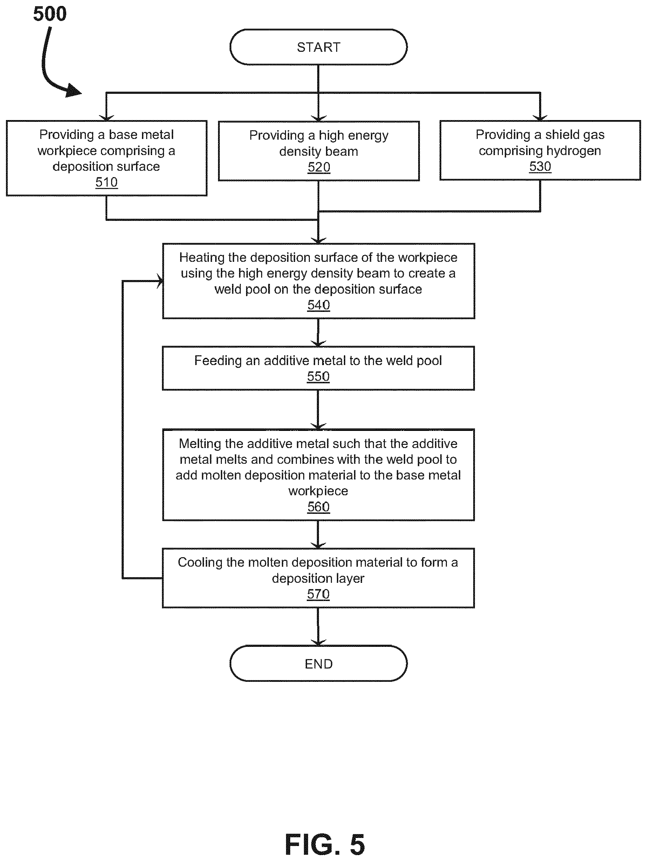

FIG. 5 illustrates a method 500 for laser additive manufacturing comprising the steps of providing a base metal workpiece comprising a deposition surface at step 510; providing a high energy density beam at step 520; providing a shield gas comprising hydrogen at step 530; heating the deposition surface of the workpiece using the high energy density beam to create a weld pool on the deposition surface at step 540; feeding an additive metal powder to the weld pool at step 550; melting the additive metal powder such that the metal powder melts and combines with the weld pool to add molten deposition material to the base metal workpiece at step 560; and cooling the molten deposition material to form a deposition layer at step 570. Additional deposition layers may be formed by repeating steps 540 through 570.

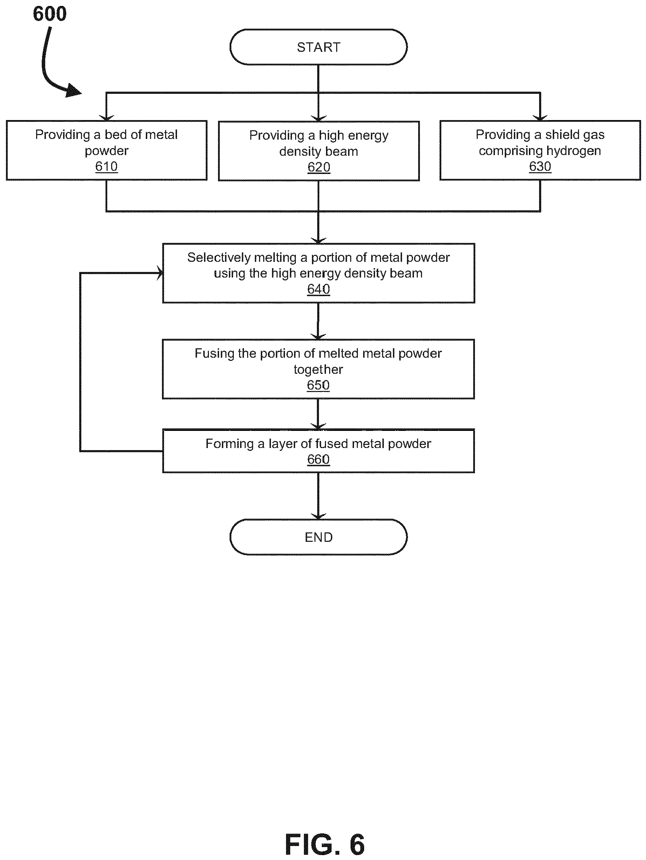

FIG. 6 illustrates a method 600 for laser manufacturing comprising the steps of: providing a bed of metal powder at step 610; providing a high energy density beam at step 620; providing a shield gas comprising hydrogen at step 630; selectively melting a portion of metal powder using the high energy density beam at step 640; fusing the portion of melted metal powder together at step 650; forming a layer of fused metal powder at step 660; and repeating steps 640 through 660 to form a series of layers of fused metal powder, and, ultimately, a metal part.

Some of the elements described herein are identified explicitly as being optional, while other elements are not identified in this way. Even if not identified as such, it will be noted that, in some embodiments, some of these other elements are not intended to be interpreted as being necessary, and would be understood by one skilled in the art as being optional.

While the present disclosure has been described with reference to certain implementations, it will be understood by those skilled in the art that various changes may be made and equivalents may be substituted without departing from the scope of the present method or system. In addition, many modifications may be made to adapt a particular situation or material to the teachings of the present disclosure without departing from its scope. For example, systems, blocks, or other components of disclosed examples may be combined, divided, re-arranged, or otherwise modified. Therefore, the present disclosure is not limited to the particular implementations disclosed. Instead, the present disclosure will include all implementations falling within the scope of the appended claims, both literally and under the doctrine of equivalents.

Further detailed embodiments of the invention are disclosed in the following clauses in which there is provided:
Clause 1. A method for laser additive manufacturing comprising the steps of:
   (a) providing a base metal workpiece comprising a deposition surface;
   (b) providing a high energy density beam;
   (c) providing a shield gas comprising hydrogen;
   (d) heating the deposition surface of the workpiece using the high energy density beam to create a weld pool on the deposition surface;
   (e) feeding an additive metal to the weld pool;
   (f) melting the additive metal such that the additive metal melts and combines with the weld pool to add molten deposition material to the base metal workpiece; and
   (g) cooling the molten deposition material to form a deposition layer,
   wherein the presence of hydrogen in the shield gas reduces the amount of slag, silicates, or oxides produced during the heating, feeding, melting, and cooling steps (d) through (g).
Clause 2. The method of clause 1, wherein the shield gas comprises 1-100 % hydrogen by volume.
Clause 3. The method of clause 2, wherein the shield gas comprises 2-50 % hydrogen by volume.
Clause 4. The method of clause 3, wherein the shield gas comprises 3-10 % hydrogen by volume.
Clause 5. The method of clause 4, wherein the shield gas comprises 5-8 % hydrogen by volume.
Clause 6. The method of clause 1, wherein the shield gas further comprises argon, carbon dioxide, nitrogen, helium, oxygen, or a mixture thereof.
Clause 7. The method of clause 1, wherein additional deposition layers are formed by repeating steps (d) through (g).
Clause 8. The method of clause 1, wherein the additive metal is an additive metal powder.
Clause 9. The method of clause 1, wherein the additive metal is an additive metal wire.
Clause 10. A method for laser manufacturing comprising the steps of:
   (a) providing a bed of metal powder;
   (b) providing a high energy density beam;
   (c) providing a shield gas comprising hydrogen;
   (d) selectively melting a portion of metal powder using the high energy density beam;
   (e) fusing the portion of melted metal powder together;
   (f) forming a layer of fused metal powder; and
   (g) repeating steps (d) through (f) to form a series of layers of fused metal powder, and, ultimately, a metal part,
   wherein the presence of hydrogen in the shield gas reduces the amount of slag, silicates, or oxides produced during the melting, fusing, and layer forming steps (d) through (f).
Clause 11. The method of clause 10, wherein the shield gas comprises 1-100 % hydrogen by volume.
Clause 12. The method of clause 11, wherein the shield gas comprises 2-50 % hydrogen by volume.
Clause 13. The method of clause 12, wherein the shield gas comprises 3-10 % hydrogen by volume.
Clause 14. The method of clause 13, wherein the shield gas comprises 5-8 % hydrogen by volume.
Clause 15. The method of clause 10, wherein the shield gas further comprises argon, carbon dioxide, nitrogen, helium, oxygen, or a mixture thereof.
Clause 16. A method for laser welding comprising the steps of:
   (a) providing a first metal piece comprising a first surface to be welded;
   (b) providing a second metal piece comprising a second surface to be welded;
   (c) positioning the first metal piece and the second metal piece so that the first and second surfaces are adjacent to each other;
   (d) providing a shield gas comprising hydrogen;
   (e) providing a high energy density beam; and
   (f) welding the first and second surfaces by scanning either or both of the first and second surfaces with the high energy density beam to produce a welded joint between the first and second surfaces,
   wherein the presence of hydrogen in the shield gas reduces the amount of slag, silicates, or oxides produced during the welding step (f).
Clause 17. The method of clause 16, wherein the shield gas comprises 1-100 % hydrogen by volume.
Clause 18. The method of clause 17, wherein the shield gas comprises 2-50 % hydrogen by volume.
Clause 19. The method of clause 18, wherein the shield gas comprises 3-10 % hydrogen by volume.
Clause 20. The method of clause 19, wherein the shield gas comprises 5-8 % hydrogen by volume.
Clause 21. The method of clause 16, wherein the shield gas further comprises argon, carbon dioxide, nitrogen, helium, oxygen or a mixture thereof.

## Claims

1. A method for laser additive manufacturing comprising the steps of:
(a) providing a base metal workpiece comprising a deposition surface;
(b) providing a high energy density beam;
(c) providing a shield gas comprising hydrogen;
(d) heating the deposition surface of the workpiece using the high energy density beam to create a weld pool on the deposition surface;
(e) feeding an additive metal to the weld pool;
(f) melting the additive metal such that the additive metal melts and combines with the weld pool to add molten deposition material to the base metal workpiece; and
(g) cooling the molten deposition material to form a deposition layer,
wherein the presence of hydrogen in the shield gas reduces the amount of slag, silicates, or oxides produced during the heating, feeding, melting, and cooling steps (d) through (g).

2. The method of claim 1, wherein the shield gas comprises 1-100 % hydrogen by volume.

3. The method of claim 2, wherein the shield gas comprises 2-50 % hydrogen by volume, preferably wherein the shield gas comprises 3-10 % hydrogen by volume, and more preferably wherein the shield gas comprises 5-8 % hydrogen by volume.

4. The method of claim 1, wherein the shield gas further comprises argon, carbon dioxide, nitrogen, helium, oxygen, or a mixture thereof.

5. The method of claim 1, wherein additional deposition layers are formed by repeating steps (d) through (g).

6. The method of claim 1, wherein the additive metal is an additive metal powder.

7. The method of claim 1, wherein the additive metal is an additive metal wire.

8. A method for laser manufacturing comprising the steps of:
(a) providing a bed of metal powder;
(b) providing a high energy density beam;
(c) providing a shield gas comprising hydrogen;
(d) selectively melting a portion of metal powder using the high energy density beam;
(e) fusing the portion of melted metal powder together;
(f) forming a layer of fused metal powder; and
(g) repeating steps (d) through (f) to form a series of layers of fused metal powder, and, ultimately, a metal part,
wherein the presence of hydrogen in the shield gas reduces the amount of slag, silicates, or oxides produced during the melting, fusing, and layer forming steps (d) through (f).

9. The method of claim 8, wherein the shield gas comprises 1-100 % hydrogen by volume.

10. The method of claim 9, wherein the shield gas comprises 2-50 % hydrogen by volume, preferably wherein the shield gas comprises 3-10 % hydrogen by volume and more preferably wherein the shield gas comprises 5-8 % hydrogen by volume.

11. The method of claim 8, wherein the shield gas further comprises argon, carbon dioxide, nitrogen, helium, oxygen, or a mixture thereof.

12. A method for laser welding comprising the steps of:
(a) providing a first metal piece comprising a first surface to be welded;
(b) providing a second metal piece comprising a second surface to be welded;
(c) positioning the first metal piece and the second metal piece so that the first and second surfaces are adjacent to each other;
(d) providing a shield gas comprising hydrogen;
(e) providing a high energy density beam; and
(f) welding the first and second surfaces by scanning either or both of the first and second surfaces with the high energy density beam to produce a welded joint between the first and second surfaces,
wherein the presence of hydrogen in the shield gas reduces the amount of slag, silicates, or oxides produced during the welding step (f).

13. The method of claim 12, wherein the shield gas comprises 1-100 % hydrogen by volume.

14. The method of claim 13, wherein the shield gas comprises 2-50 % hydrogen by volume, preferably wherein the shield gas comprises 3-10 % hydrogen by volume and more preferably wherein the shield gas comprises 5-8 % hydrogen by volume.

15. The method of claim 12, wherein the shield gas further comprises argon, carbon dioxide, nitrogen, helium, oxygen or a mixture thereof.
